# EUROPEAN PATENT APPLICATION

(11) **EP 4 763 877 A1**
(43) Date of publication of application: **24.06.2026**
(21) Application number: 24854300.1
(22) Date of filing: 27.06.2024
(51) Int. Cl.: C08F 210/16, C08F 4/6592, C08F 4/659, C08F 2/04, C08F 2/44

(54) **METHOD FOR SOLUTION POLYMERIZATION OF ETHYLENE-ALPHA-OLEFIN COPOLYMER USING TRANSITION METAL COMPOUND**

(30) Priority: 17.08.2023 KR 20230107579
(71) Applicant: Hanwha Solutions Corporation, Jung-gu Seoul 04541 (KR)
(72) Inventor: JUN, Sung Hae, Daejeon 34128 (KR); PARK, Ranwha, Daejeon 34128 (KR); LEE, Won Jong, Daejeon 34128 (KR); KIM, Kyung Woo, Daejeon 34128 (KR); PARK, Seong Yeon, Daejeon 34128 (KR); JEONG, Taeho, Daejeon 34128 (KR); KIM, Dong Wook, Daejeon 34128 (KR)
(74) Representative: Berggren Oy
(86) International application number: PCT/KR2024/009004
(87) International publication number: WO 2025/037747

(57) **Abstract**

A solution polymerization method for an ethylene-α-olefin copolymer according to the present disclosure can produce an ethylene-α-olefin copolymer having a low viscosity of 20,000 cP or less, a polydispersity index of 3.0 or more, and a low molecular weight, and can produce an ethylene-α-olefin copolymer having the above physical properties without introducing hydrogen or by introducing a smaller amount of hydrogen compared to conventional methods.

## Description

### Technical Field

The present disclosure relates to a solution polymerization method for an ethylene-α-olefin copolymer.

### Background Art

Conventional catalysts used for polymerizing olefin-based polymers include metallocene catalysts and Ziegler-Natta catalysts, and these two types of conventional catalysts result in different characteristics for the molecular weight, molecular structure, density, and melt flow index of the produced olefin-based polymers.

The conventional metallocene catalyst is one type of catalyst used for ethylene polymerization, in which ligands such as cyclopentadienyl, cycloheptadienyl, indenyl, or fluorenyl are coordinated to a metal or a metal halide, with the parent structure fundamentally having a sandwich-type configuration.

The conventional metallocene catalyst is a single compound having a uniform structure, in which all active sites are uniform. An ethylene-based polymer polymerization method using the conventional metallocene catalyst has the advantage of producing an ethylene-based polymer having a narrow molecular weight distribution and a uniform comonomer distribution.

In contrast, the conventional Ziegler-Natta catalyst has non-uniform active sites because metal components dispersed on a solid surface are not uniform so that an ethylene-based polymer polymerization method using the conventional Ziegler-Natta catalyst is suitable for polymerizing an ethylene-based polymer having a broad molecular weight distribution and various molecular structures.

Polymers conventionally used as materials for films, containers, cables, pipes, or fibers include both low-molecular-weight polymers and high-molecular-weight polymers. In some cases, polymers having a high melt flow index and very low viscosity are required, for which the conventional polymerization method using the Ziegler-Natta catalyst may be preferred.

However, as described above, because the conventional Ziegler-Natta catalyst has non-uniform active sites, it does not allow precise control of the viscosity, molecular weight distribution, molecular structure, and comonomer content targeted by those skilled in the art, and thus, it is difficult to polymerize an olefin-based polymer having optimal physical properties for a given material.

Accordingly, as disclosed in Patent Document 1 (U.S. Patent No. 5,272,236 A), it has been known that, in conventional polymerization methods for olefin-based polymers using metallocene catalysts, the physical properties of the polymerized olefin-based polymer can be controlled by adjusting various polymerization conditions such as reaction temperature, monomer feed amount, oxygen feed amount, and stirring speed.

However, in conventional polymerization methods for olefin-based polymers using metallocene catalysts, the physical properties of the produced olefin-based polymer cannot be dramatically adjusted merely by adjusting the polymerization conditions.

Therefore, there is a need for an olefin-based polymerization method using a new metallocene catalyst that can polymerize an olefin-based polymer having a high polydispersity index and a low viscosity and that allows easy control of the physical properties.

### Disclosure of Invention

### Technical Problem

An object of the present disclosure is to provide a solution polymerization method for an ethylene-α-olefin copolymer, which uses a transition metal compound having high activity and is capable of producing an ethylene-α-olefin copolymer having low viscosity.

Another object of the present disclosure is to provide a solution polymerization method for an ethylene-α-olefin copolymer that can produce an ethylene-α-olefin copolymer having low viscosity even without introducing hydrogen or by introducing only a very small amount of hydrogen.

Another object of the present disclosure is to provide a solution polymerization method for an ethylene-α-olefin copolymer that can produce an ethylene-α-olefin copolymer having low density.

Another object of the present disclosure is to provide a solution polymerization method for an ethylene-α-olefin copolymer capable of producing an ethylene-α-olefin copolymer having a broad molecular weight distribution.

Another object of the present disclosure is to provide an ethylene-α-olefin copolymer that can simultaneously possess low viscosity, low density, low molecular weight, and a broad molecular weight distribution.

### Solution to Problem

In an embodiment of the present disclosure, the solution polymerization method for an ethylene-α-olefin copolymer uses a catalyst composition including a transition metal compound of Formula 1 below and a cocatalyst. The ethylene-α-olefin copolymer produced by introducing hydrogen at 1,000 ppm or less based on the total amount of feed materials introduced, may have a viscosity of 20,000 cP or less, wherein the viscosity is defined as a value measured using a Brookfield DV2TLV viscometer with an SC-31 spindle on the copolymer melted at 177 °C, at a torque value of 99 % or more.

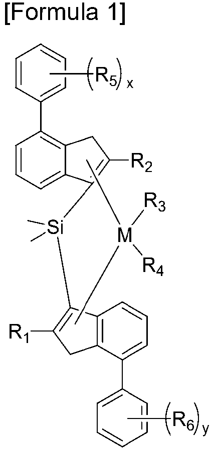

(In Formula 1, R₁ and R₂ are each independently a linear or branched C₁-C₇ alkyl, R₃ and R₄ are each independently a linear or branched C₁-C₇ alkyl, a C₆-C₁₂ aryl, or a C₇-C₂₀ arylalkyl, R₅ and R₆ are each independently hydrogen or a linear or branched C₁-C₄ alkyl, x and y are each independently an integer of 1 to 5, and M is titanium (Ti), zirconium (Zr), or hafnium (Hf).)

In an embodiment of the present disclosure, in Formula 1, R₁ and R₂ may be the same and are methyl, ethyl, or n-butyl, R₃ and R₄ may be the same and may be methyl, ethyl, n-butyl, phenyl, or benzyl, R₅ and R₆ may be each independently hydrogen or methyl, x and y may be each independently an integer of 1 to 5, and M may be Zr or Hf.

In an embodiment of the present disclosure, the ethylene-α-olefin copolymer may have a density of 0.9 g/cc or less as measured according to ASTM D1505.

In another embodiment, the ethylene-α-olefin copolymer may have a density of 0.850 to 0.900 g/cc, 0.850 to 0.885 g/cc, or 0.850 to 0.879 g/cc as measured according to ASTM D1505.

In an embodiment of the present disclosure, the ethylene-α-olefin copolymer may have a weight-average molecular weight of 30,000 g/mol or less.

In another embodiment, the ethylene-α-olefin copolymer may have a weight-average molecular weight of 10,000 to 30,000 g/mol, or 15,000 to 30,000 g/mol.

In an embodiment of the present disclosure, the ethylene-α-olefin copolymer may have a polydispersity index of 3.0 or more.

In another embodiment, the polydispersity index of the ethylene-α-olefin copolymer may be 3.0 to 6.0, 3.0 to 5.0, or 3.0 to 4.5.

In an embodiment of the present disclosure, the ethylene-α-olefin copolymer may have an ethylene repeating unit content of 50 to 99 mol%, 60 to 99 mol%, 70 to 99 mol%, or 80 mol% to 99 mol%.

In an embodiment of the present disclosure, the cocatalyst may be at least one selected from N,N-diethylanilinium tetrakis(pentafluorophenyl)borate, N,N-2,4,6-pentamethylanilinium tetrakis(pentafluorophenyl)borate, N,N-dimethylanilinium tetrakis(3,5-bistrifluoromethylphenyl)borate, and the like.

In an embodiment of the present disclosure, the ethylene-α-olefin copolymer may be a copolymer of ethylene and at least one α-olefin selected from the group consisting of 1-octene, 1-hexene, 1-butene, and the like.

In an embodiment of the present disclosure, the solution polymerization method for an ethylene-α-olefin copolymer may use at least one solvent selected from the group consisting of n-hexane, n-heptane, n-butane, n-pentane, n-octane, cyclohexane, and the like.

In an embodiment of the present disclosure, the solution polymerization method for an ethylene-α-olefin copolymer may be carried out at a polymerization temperature of 30 to 200 °C.

In an embodiment of the present disclosure, the solution polymerization method for an ethylene-α-olefin copolymer may include: a) preparing an α-olefin composition by mixing an α-olefin in a solvent; and b) preparing the ethylene-α-olefin copolymer through copolymerization by introducing a catalyst composition into the α-olefin composition and introducing ethylene into a reactor.

In an embodiment of the present disclosure, the solution polymerization method for an ethylene-α-olefin copolymer may further include at least one aluminum scavenger selected from the group consisting of trimethylaluminum, triethylaluminum, tripropylaluminum, triisobutylaluminum, trihexylaluminum, and the like.

### Advantageous Effects of Invention

According to the present disclosure, the solution polymerization method for an ethylene-α-olefin copolymer can produce an ethylene-α-olefin copolymer having a viscosity of 20,000 cP or less, such that the produced ethylene-α-olefin copolymer exhibits excellent biaxial orientation processability, blow moldability, and the like, and may be usefully used for films or containers.

According to the present disclosure, the solution polymerization method for an ethylene-α-olefin copolymer may or may not involve introducing hydrogen. In an example, since an ethylene-α-olefin copolymer having a viscosity of 20,000 cP or less can be produced even when a very small amount of hydrogen of 1,000 ppm or less based on the total amount of feed materials introduced is introduced, the solution polymerization method can achieve superior polymerization stability, a smaller polymerization reactor volume, a shorter polymerization time, and the like.

According to the present disclosure, the solution polymerization method for an ethylene-α-olefin copolymer can produce ethylene-α-olefin copolymers having various molecular weights with a polydispersity index (PDI) of 3 or more by copolymerization, such that the produced ethylene-α-olefin copolymer may be usefully used as a material for films, pipes, sheets, and the like.

In an embodiment of the present disclosure, the solution polymerization method for an ethylene-α-olefin copolymer can produce an ethylene-α-olefin copolymer having a density of 0.9 g/cc or less, 0.850 to 0.900 g/cc, or 0.850 to 0.879 g/cc as measured according to ASTM D1505, such that the produced ethylene-α-olefin copolymer may be usefully used as a material for articles requiring low density, such as beverage bottles.

### Brief Description of Drawings

### Best Mode for Carrying out the Invention

Hereinafter, the present disclosure will be described in further detail. However, the following specific examples or embodiments are merely illustrative of the present disclosure and are not intended to limit the scope thereof. The present disclosure may be embodied in various forms.

Unless otherwise defined, all technical and scientific terms used herein have the same meaning as commonly understood by one of ordinary skill in the art to which the present disclosure belongs. The terminology used herein is for the purpose of describing particular embodiments only and is not intended to be limiting of the disclosure.

As used in the specification and the appended claims, the singular forms are intended to include the plural forms as well, unless the context clearly indicates otherwise.

When a part is said to "comprise" or "include" a component, this does not exclude other components but means that other components may be further included, unless otherwise specified.

As used herein, the terms "about," "substantially," and the like are used to indicate values at or near the stated value when inherent manufacturing and material tolerances are considered, and are used to prevent unconscionable infringers from unfairly exploiting the disclosure of exact or absolute values that aid in understanding the disclosure.

In an embodiment of the present disclosure, the solution polymerization method for an ethylene-α-olefin copolymer may produce an ethylene-α-olefin copolymer having a viscosity of 20,000 cP or less by using a catalyst composition including a transition metal compound of Formula 1 below and a cocatalyst.

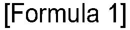

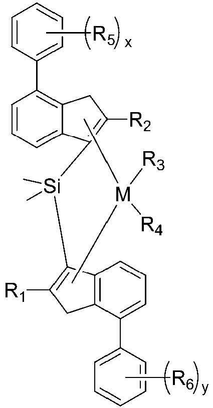

(In Formula 1, R₁ and R₂ are each independently a linear or branched C₁-C₇ alkyl, R₃ and R₄ are each independently a linear or branched C₁-C₇ alkyl or a C₇-C₂₀ arylalkyl, R₅ and R₆ are each independently hydrogen or a linear or branched C₁-C₄ alkyl, x and y are each independently an integer of 1 to 5, and M is titanium (Ti), zirconium (Zr), or hafnium (Hf).)

In an embodiment of the present disclosure, the ethylene-α-olefin copolymer may have a viscosity of 20,000 cP or less, preferably 15,000 cP or less, more preferably 10,000 cP or less, or 9,000 cP or less, and although the lower limit is not limited, may have the viscosity of 1,000 cP or more, 3,000 cP or more, or 5,000 cP or more.

An ethylene-α-olefin copolymer satisfying the viscosity in the above range may have excellent molding processability such as injection, extrusion, or casting, and may be particularly preferred as biaxially oriented film molding or blow molding processes can be easily performed.

The method for measuring the viscosity of the ethylene-α-olefin copolymer will be described in more detail in the examples below, but the viscosity may be measured using a Brookfield viscometer (Brookfield Engineering, DV2TLV) for an ethylene-α-olefin copolymer melted at 177 °C, and may be measured by introducing 10 g of the ethylene-α-olefin copolymer into a sample chamber of the viscometer. In addition, the method for measuring the viscosity of the ethylene-α-olefin copolymer may be one in which a torque value of 99 % or more is satisfied when using an SC-31 spindle, but the measurement method is only an example and is not necessarily limited thereto.

In an embodiment of the present disclosure, the ethylene-α-olefin copolymer may have a density of 0.9 g/cc or less, preferably 0.88 g/cc or less, more preferably 0.879 g/cc or less or 0.875 g/cc or less as measured according to ASTM D1505, and although the lower limit is not limited, may have the density of 0.850 g/cc or more.

When melted at 177 °C, the ethylene-α-olefin copolymer has a very low viscosity and a low density in the above range, thereby allowing films, containers, and the like to be manufactured with excellent processability and allowing the films and containers to be manufactured with physical properties at a commercially available level.

In an embodiment of the present disclosure, the ethylene-α-olefin copolymer may have a weight-average molecular weight of 30,000 g/mol or less, in another embodiment, 27,000 g/mol or less or 25,000 g/mol or less, and although the lower limit is not limited, the weight-average molecular weight may be 15,000 g/mol or more or 20,000 g/mol or more.

Since the solution polymerization method for an ethylene-α-olefin copolymer can produce an ethylene-α-olefin copolymer having a lower weight-average molecular weight than a solution polymerization method for an ethylene-α-olefin copolymer using a conventional transition metal compound, the produced copolymer may have a viscosity and a melt flow index in the ranges described below.

In an embodiment of the present disclosure, the ethylene-α-olefin copolymer may have a melt flow index of 500 g/10 min or more under a load of 2.16 kg as measured according to ASTM D1238, preferably 1,000 g/10 min or more, more preferably 1,500 g/10 min or more, and although the upper limit is not limited, may have the melt flow index of 2,000 g/10 min or less, or may be so high that measurement is impossible.

Specifically, the melt flow index of the ethylene-α-olefin copolymer was measured based on ASTM D1238, and may be a measurement of the melt flow index (g/10 min) under the condition of a load of 2.16 kg after melting the ethylene-α-olefin copolymer at 190 °C.

Since the ethylene-α-olefin copolymer can have a very low weight-average molecular weight of 30,000 g/mol or less according to one embodiment, the copolymer may have a very high melt flow index that is unmeasurable by a conventional melt flow index measurement method.

In an embodiment of the present disclosure, the ethylene-α-olefin copolymer may have a polydispersity index of 3.0 or more, 3.1 or more, preferably 4.0 or more, more preferably 4.3 or more; and although the upper limit is not limited, may have the polydispersity index of 5.0 or less or 4.5 or less.

Since the ethylene-α-olefin copolymer can have a low weight-average molecular weight in the above range, a resin simultaneously including a low-molecular-weight ethylene-α-olefin copolymer and a high-molecular-weight ethylene-α-olefin copolymer may be provided, and the provided resin may be usefully used for films and containers manufactured with excellent processability such as high biaxial orientation molding and blow molding.

In an embodiment of the present disclosure, the ethylene-α-olefin copolymer may be one obtained by copolymerizing ethylene and at least one α-olefin selected from the group consisting of 1-octene, 1-hexene, 1-butene, and the like. In another embodiment, the α-olefin may be 1-octene, 1-hexene, or a mixed monomer thereof, or may be 1-octene, but is not necessarily limited thereto.

In an embodiment of the present disclosure, the ethylene-α-olefin copolymer may have an ethylene repeating unit content of 50 to 99 mol% relative to the total repeating units, and in another embodiment, 60 to 99 mol% or 70 to 99 mol%, but is not necessarily limited thereto.

An ethylene-α-olefin copolymer including α-olefin repeating units in the above range may have excellent mechanical strength and may be preferred as it can be effectively used as a heat-sealable film by having high heat sealability.

In an embodiment of the present disclosure, an ethylene-α-olefin copolymer capable of satisfying the aforementioned physical properties may be produced by using a catalyst composition including a transition metal compound represented by Formula 1 below and a cocatalyst.

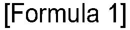

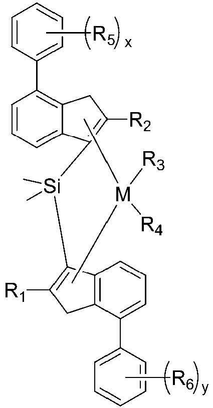

(In Formula 1, R₁ and R₂ are each independently a linear or branched C₁-C₇ alkyl, R₃ and R₄ are each independently a linear or branched C₁-C₇ alkyl or a C₇-C₂₀ arylalkyl, R₅ and R₆ are each independently hydrogen or a linear or branched C₁-C₄ alkyl, x and y are each independently an integer of 1 to 5, and M is titanium (Ti), zirconium (Zr), or hafnium (Hf).)

A transition metal compound satisfying the above structure may be preferred because the ligand structure satisfies Formula 1, enabling the production of an ethylene-α-olefin copolymer with very low viscosity even if the active metal (M in Formula 1) is not hydrogenated.

In an embodiment of the present disclosure, in Formula 1, R₁ and R₂ may be the same and be methyl, ethyl, or n-butyl, R₃ and R₄ may be the same and be methyl, ethyl, n-butyl, phenyl, or benzyl, R₅ and R₆ may each independently be hydrogen or methyl, x and y may each independently be an integer of 1 to 5, and M may be Zr or Hf.

When the transition metal compound has the structure of Formula 1 described above, the transition metal compound may exhibit high activity and rapid chain transfer reactions even if M, the active metal, is not hydrogenated. Accordingly, the ethylene-α-olefin copolymer produced by including the transition metal compound described above may be preferred as the copolymer can have a lower viscosity without introducing hydrogen during the polymerization process.

In an embodiment of the present disclosure, the transition metal compound may have an activity of 400 to 600 kg(mPo)/g·hr(cat), and in another embodiment, 400 to 500 kg(mPo)/g·hr(cat).

The activity of the transition metal compound may be the amount (kg) of the ethylene-α-olefin copolymer (mPo) produced per hour relative to the content (g) of the transition metal compound (cat) included in the solution polymerization method for an ethylene-α-olefin copolymer. The transition metal compound may satisfy the activity in the above range whether or not the active metal (M in Formula 1) is hydrogenated.

Since the transition metal compound has an activity in the above range, solution polymerization of an ethylene-α-olefin copolymer using the transition metal compound may exhibit excellent polymerization reactivity. A transition metal compound having the above structure may exhibit excellent copolymerization reactivity, and the solution polymerization method for an ethylene-α-olefin copolymer using the transition metal compound may produce a low-viscosity ethylene-α-olefin copolymer with only a small amount of hydrogen introduced.

In an embodiment of the present disclosure, in the solution polymerization method for an ethylene-α-olefin copolymer, the amount of hydrogen introduced may be 1,000 ppm or less relative to the total amount of feed materials introduced, and in another embodiment, 500 ppm or less, or hydrogen may not be introduced.

The feed materials may refer to all compounds introduced into a polymerization reactor, such as a solvent, a monomer, a scavenger, a catalyst composition, and hydrogen.

Since the transition metal compound has high activity even without introducing hydrogen, the solution polymerization method for an ethylene-α-olefin copolymer using the transition metal compound can produce a low-viscosity ethylene-α-olefin copolymer without introducing hydrogen or by introducing only a very small amount of hydrogen. The method may therefore be preferred as it can achieve excellent polymerization stability, a small volume polymerization apparatus, a shorter polymerization time, and the like.

In an embodiment of the present disclosure, the cocatalyst is not particularly limited as long as it is recognizable by one of ordinary skill in the art, but may be at least one selected from the group consisting of N,N-diethylanilinium tetrakis(pentafluorophenyl)borate, N,N-2,4,6-pentamethylanilinium tetrakis(pentafluorophenyl)borate, N,N-dimethylanilinium tetrakis(3,5-bistrifluoromethylphenyl)borate, and the like.

In another embodiment of the present disclosure, the cocatalyst may be N,N-diethylanilinium tetrakis(pentafluorophenyl)borate or N,N-2,4,6-pentamethylanilinium tetrakis(pentafluorophenyl)borate, or N,N-diethylanilinium tetrakis(pentafluorophenyl)borate may be used alone.

The N,N-diethylanilinium tetrakis(pentafluorophenyl)borate may be preferred as it can exhibit excellent compatibility with the aforementioned transition metal compound, but is not necessarily limited thereto.

In an embodiment of the present disclosure, the catalyst composition may have a molar ratio of the transition metal compound to the cocatalyst of 1:5 to 1:10, and in another embodiment, 1:5 to 1:8 or 1:5 to 1:7.

A catalyst composition satisfying a molar ratio within the above range increases the activity, selectivity, and stability of the transition metal compound, thereby facilitating control of the weight-average molecular weight of the ethylene-α-olefin copolymer produced by the solution polymerization method using the catalyst composition. Such a molar ratio may be preferred, but the disclosure is not necessarily limited thereto.

In an embodiment, the solution polymerization method for an ethylene-α-olefin copolymer may include: a) preparing an α-olefin composition by mixing an α-olefin in a solvent, and b) preparing the ethylene-α-olefin copolymer through copolymerization by introducing a catalyst composition into the α-olefin composition and introducing ethylene into the reactor.

It may be preferred that the aforementioned production steps, a) and b), proceed sequentially, but each step is one aspect of the present disclosure and is not necessarily limited thereto as long as the physical properties of the produced ethylene-α-olefin copolymer are not impaired.

In an embodiment of the present disclosure, the solvent may be at least one selected from the group consisting of n-hexane, n-heptane, n-butane, n-pentane, n-octane, cyclohexane, and the like.

In another embodiment, the solvent may be n-hexane or cyclohexane. n-hexane may be used alone in terms of having excellent solubility for the α-olefin, but the solvent is not necessarily limited thereto as long as it can dissolve the α-olefin and does not impair the physical properties of the produced ethylene-α-olefin copolymer.

In an embodiment of the present disclosure, the α-olefin composition may include the α-olefin at 0.1 to 1 M, and in another embodiment, 0.5 to 1 M, but is not necessarily limited thereto.

In an embodiment of the present disclosure, the solution polymerization method for an ethylene-α-olefin copolymer may have an internal pressure of the reactor of 10 to 50 bar, and in another embodiment, 20 to 40 bar.

It may be preferred that the solution polymerization method for an ethylene-α-olefin copolymer has an internal pressure of the reactor in the range described above in terms of the produced ethylene-α-olefin copolymer having a target weight-average molecular weight, ethylene repeating unit content, and polydispersity index, but this is not particularly limited as long as it is recognizable by one of ordinary skill in the art.

In another embodiment of the present disclosure, the solution polymerization method for an ethylene-α-olefin copolymer may involve introducing ethylene at an internal pressure of the reactor of 10 to 30 bar, or 15 to 25 bar.

An ethylene-α-olefin copolymer produced by introducing ethylene at a pressure in the above range may be preferred as it can contain target ethylene repeating units and thus have target physical properties.

In an embodiment of the present disclosure, the solution polymerization method for an ethylene-α-olefin copolymer may further involve introducing an inert gas, which may be introduced at an internal pressure of the reactor of 10 to 40 bar, 10 to 30 bar, or 20 to 30 bar.

The inert gas may be introduced after introducing ethylene into the reactor. This may be preferred as it can maintain the internal pressure of the reactor, which decreases due to the consumption of ethylene in b) of producing the ethylene-α-olefin copolymer by copolymerization, at 10 to 50 bar as described above.

The inert gas is not particularly limited, but as a non-limiting example, may be at least one selected from helium, neon, argon, and the like. Argon may be preferred in terms of providing a safer solution polymerization method for an ethylene-α-olefin copolymer.

In an embodiment of the present disclosure, the solution polymerization method for an ethylene-α-olefin copolymer may further include an aluminum scavenger, which is preferably introduced before introducing ethylene, the transition metal compound, and the cocatalyst.

The solution polymerization method for an ethylene-α-olefin copolymer further including the aluminum scavenger may be preferred as it can produce a high-purity ethylene-α-olefin copolymer by removing oxygen, moisture, impurities, and the like included in the α-olefin composition.

In an embodiment of the present disclosure, the aluminum scavenger is not particularly limited as long as it is recognizable by one of ordinary skill in the art, but may be any one or two or more selected from the group consisting of trimethylaluminum, triethylaluminum, tripropylaluminum, triisobutylaluminum, trihexylaluminum, and the like. In another embodiment, triisobutylaluminum may be used alone, which is preferred as it enables the production of a higher-purity ethylene-α-olefin copolymer.

In an embodiment of the present disclosure, the aluminum scavenger may be introduced at 0.5 to 2 µmol or 0.5 to 1.5 µmol relative to 1 L of the α-olefin composition, but is not necessarily limited thereto.

In an embodiment of the present disclosure, the solution polymerization method for an ethylene-α-olefin copolymer may have a polymerization reaction temperature of 30 to 200 °C, 30 to 150 °C, or 30 to 100 °C, and in another embodiment, 50 to 100 °C, or 60 to 80 °C.

Since the polymerization reaction temperature in the above range allows the transition metal compound to have high activity, the solution polymerization method for an ethylene-α-olefin copolymer may exhibit excellent polymerization processability. Further, it may be preferred since the content of unreacted ethylene and α-olefin is small, enabling a reduction in the process of recycling unreacted monomers and the volume of process facilities, but is not necessarily limited thereto as long as the physical properties of the produced ethylene-α-olefin copolymer are not impaired.

Hereinafter, the present disclosure will be described in more detail with reference to Examples and Comparative Examples. The following Examples and Comparative Examples are provided for illustrative purposes only and are not intended to limit the scope of the present disclosure.

### [Measurement Methods]

### 1. Gel Permeation Chromatography (GPC) Measurement

A measurement solution prepared by dissolving an ethylene-α-olefin copolymer in trichlorobenzene was analyzed using GPC (Polymer Char, GPC-6). The weight-average molecular weight and polydispersity index (PDI) of the ethylene-α-olefin copolymer were determined using a column (PLgel Olexis, Agilent) at 160 °C at a flow rate of 1.0 ml/min.

### 2. Viscosity Measurement

The ethylene-α-olefin copolymer was introduced into the sample chamber of a Brookfield DV2TLV viscometer. Using an SC-31 spindle, the viscosity of the ethylene-1-octene copolymer melted at 177 °C was measured, with the viscosity value recorded at a torque value of 99 % or more.

### 3. Density Measurement

The density was measured in accordance with ASTM D1505.

### [Preparation Example 1]

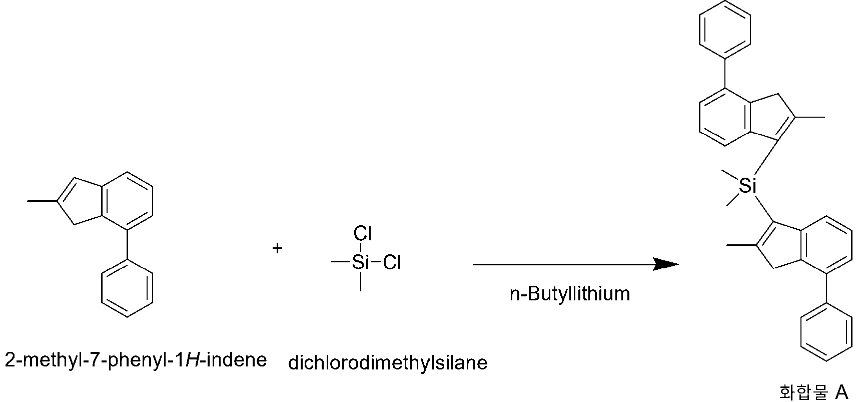

2-methyl-7-phenyl-1H-indene (3.00 g, 14.5 mmol) was dissolved in diethyl ether (30 ml), and n-butyllithium (4.7 ml of a 1.6 M solution in hexane) was slowly added at room temperature, followed by stirring at the initial reactor temperature for 12 hours. The stirred solution was then cooled to -30 °C, and dichlorodimethylsilane (0.94 g, 7.3 mmol) was slowly added. The solution was warmed to room temperature and stirred for 12 hours. The resulting solution was filtered, and the filtrate was dried in an oven to obtain Compound A (3.2 g, 6.9 mmol) in 95 % yield.

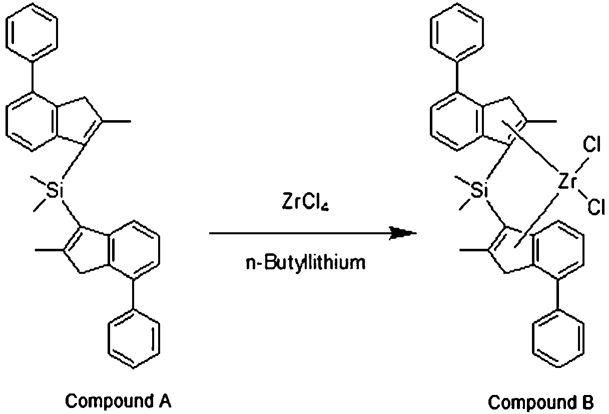

Compound A (1.0 g, 2.13 mmol) thus obtained was dissolved in ether (20 ml), and n-butyllithium (2.6 ml of a 1.6 M solution in hexane) was slowly added at -30 °C. The solution was then warmed to room temperature and stirred for 12 hours. The temperature was lowered again to -30 °C, and ZrCl₄ (496 mg, 2.13 mmol) was added. The mixture was then warmed to room temperature and stirred for 12 hours to carry out the reaction. After completion of the reaction, the solvent was removed, and the dried reaction product was immersed in toluene to wash residual impurities. The product was then dried in an oven to remove toluene, thereby obtaining Compound B (224 mg) in 15 % yield. The obtained compound was characterized by ¹H-NMR (CDCl₃, 300 MHz): δ 7.68-6.83 (m, 18H), 2.46 (s, 3H), 2.26 (s, 3H), 1.48-1.26 (m, 6H).

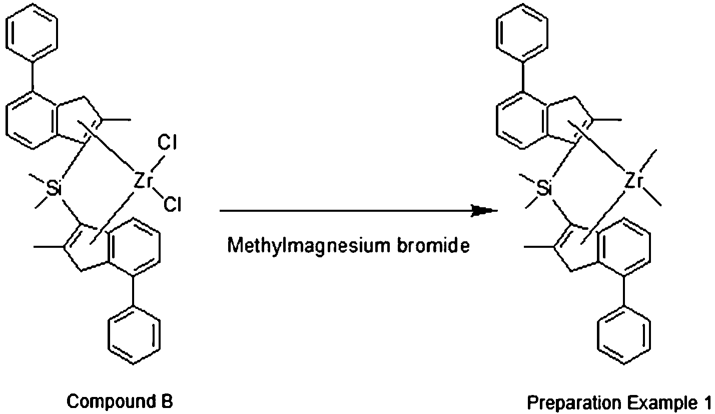

Finally, Compound B obtained above (0.1 g, 0.16 mmol) was dissolved in toluene (2 ml). While cooling to -30 °C, methylmagnesium bromide (0.16 ml of a 3.0 M solution in ether) was slowly added. The mixture was then warmed to room temperature and stirred for 12 hours to carry out the reaction. After completion of the reaction, the solvent was removed, and the product was immersed in hexane to wash impurities. The product was then dried in an oven to obtain the compound of Preparation Example 1 (37.5 mg) in 82 % yield. The obtained compound of Preparation Example 1 was characterized by ¹H-NMR (C₆D₆, 300 MHz): δ 7.76-6.82 (m, 18H), 1.97 (s, 6H), 0.78 (s, 6H), -0.78 (s, 6H).

### [Preparation Example 2]

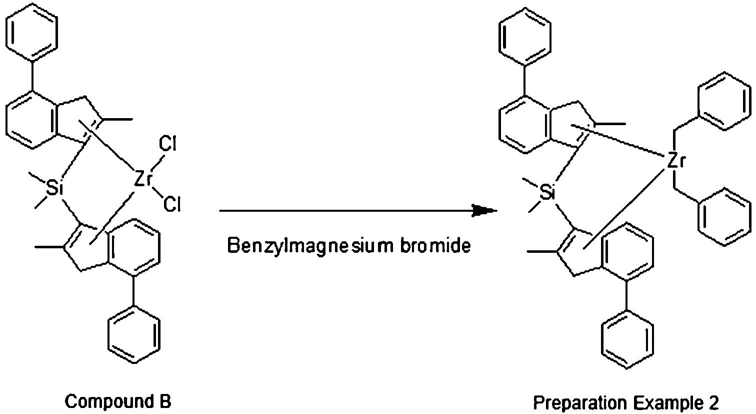

In Preparation Example 1, Compound B (0.1 g, 0.16 mmol) was dissolved in toluene (2 ml). While cooling to -30 °C, benzylmagnesium bromide (0.48 ml of a 1.0 M solution in ether) was slowly added. The mixture was then warmed to room temperature and stirred for 12 hours to carry out the reaction. After completion of the reaction, the solvent was removed, and the product was immersed in hexane to wash impurities. The product was then dried in an oven to obtain the compound of Preparation Example 2 (69 mg) in 58 % yield. The obtained compound of Preparation Example 2 was characterized by ¹H-NMR (C₆D₆, 300 MHz): δ 7.46-6.24 (m, 18H), 1.99 (s, 6H), 1.13 (d, 2H), 0.82 (s, 6H), -0.30 (d, 3H).

### [Comparative Preparation Example 1]

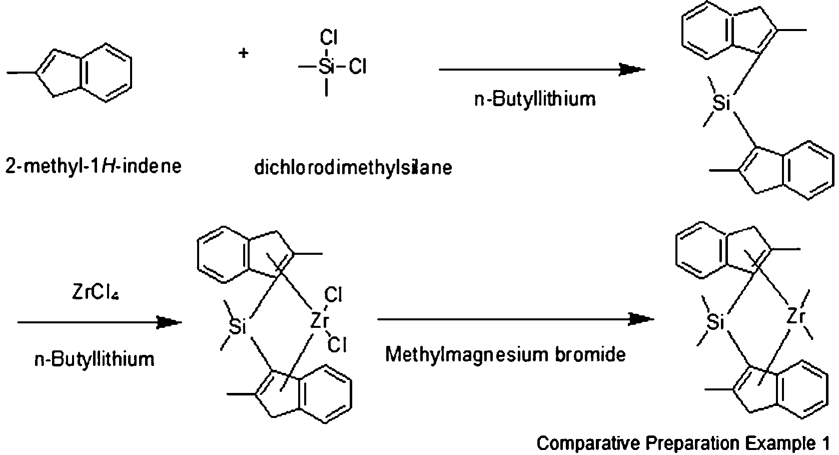

The reaction was carried out in the same manner as in Preparation Example 1, except that 2-methyl-1H-indene was used instead of 2-methyl-7-phenyl-1H-indene, thereby obtaining the compound of Comparative Preparation Example 1 (121 mg) in 48 % yield.

### [Comparative Preparation Example 2]

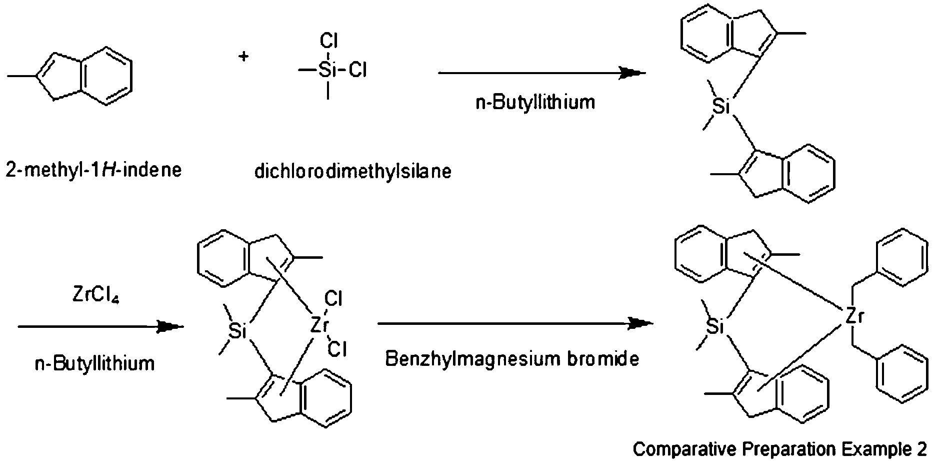

The reaction was carried out in the same manner as in Preparation Example 2, except that 2-methyl-1H-indene was used instead of 2-methyl-7-phenyl-1H-indene, thereby obtaining Comparative Preparation Example 2 (102 mg) in 23 % yield.

### [Comparative Preparation Example 3]

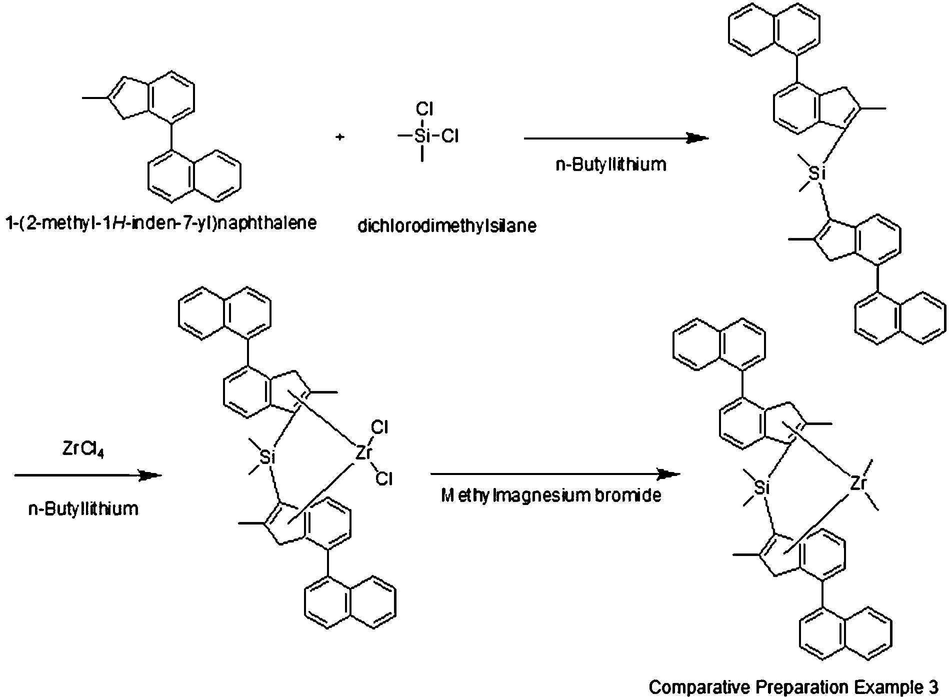

The reaction was carried out in the same manner as in Preparation Example 1, except that 1-(2-methyl-1H-inden-7-yl)naphthalene was used instead of 2-methyl-7-phenyl-1H-indene, thereby obtaining the compound of Comparative Preparation Example 3 (21 mg) in 32 % yield.

### [Comparative Preparation Example 4]

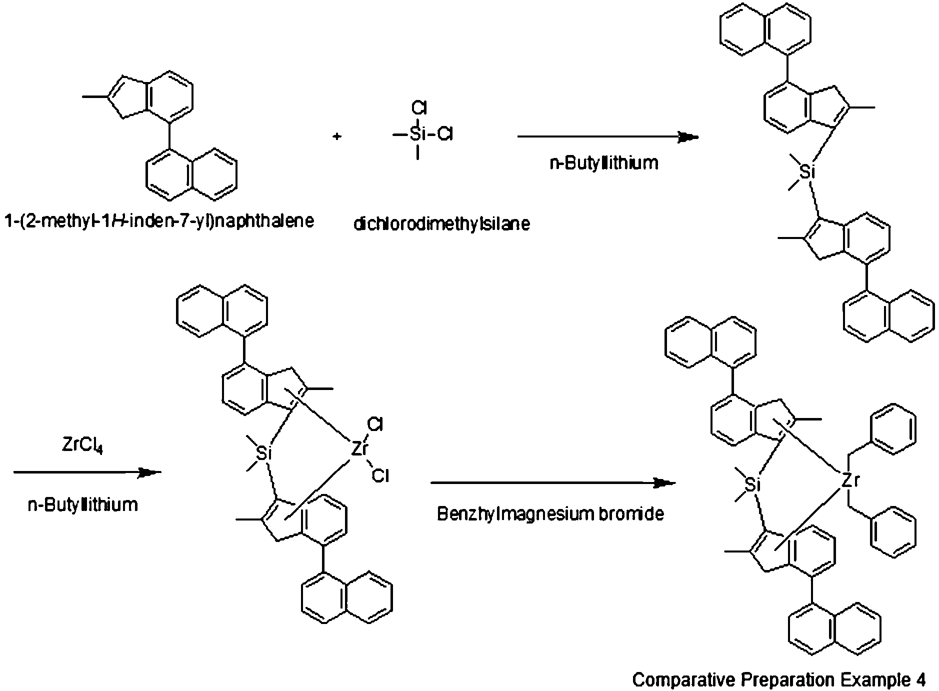

The reaction was carried out in the same manner as in Preparation Example 2, except that 1-(2-methyl-1H-inden-7-yl)naphthalene was used instead of 2-methyl-7-phenyl-1H-indene, thereby obtaining the compound of Comparative Preparation Example 4 (102 mg) in 23 % yield.

### [Comparative Preparation Example 5]

A transition metal compound of Comparative Preparation Example 5 represented by the following Formula 2 was prepared by reacting in the same manner as disclosed in U.S. Patent No. 5,272,236 A (November 29, 1993).

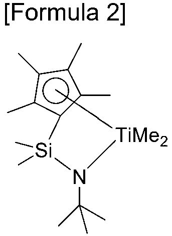

### [Examples 1 and 2 and Comparative Examples 1 to 5]

Using a vacuum pump, a 2-liter autoclave reactor was evacuated to a low pressure of 0.3 torr or less to remove moisture and impurities therein, and the reactor was then purged with argon (Ar) gas for at least 30 minutes while raising the reactor temperature to 60 °C.

A hexane solution in which 1-octene was dissolved at a concentration of 0.8 M was introduced into the heated reactor, and triisobutylaluminum (TiBAL) (2 ml of a 1 M solution) was added as a scavenger. The reactor was then stirred at 500 rpm while raising the temperature to 80 °C. Upon reaching 80 °C, the stirring was stopped, and 2 µmol of the catalyst shown in Table 1 below and ethylene were introduced into the reactor to a pressure of 20 bar. In the reactor after the catalyst and ethylene were introduced, argon was continuously introduced to maintain the internal reactor pressure at 25 bar, and 12 µmol of dimethylanilinium tetrakis(pentafluorophenyl)borate was additionally introduced as a cocatalyst into the pressurized reactor.

The reactor, containing the cocatalyst and maintained at a constant pressure with argon gas, was heated from 80 °C to 120 °C to carry out the polymerization reaction. After 5 minutes of polymerization, the reaction was terminated by stopping the argon feed.

The molten polymer inside the reactor was transferred to a separator through a reactor outlet, and unreacted ethylene and 1-octene were separated from the hexane solvent. The polymer was dried in a vacuum oven at 80 °C for 12 hours to obtain an ethylene-1-octene copolymer.

The obtained ethylene-1-octene copolymer was then measured by the measurement methods described above, and the results are shown in Table 1 below.

### [Examples 3 and 4 and Comparative Examples 6 to 8]

The reaction was carried out in the same manner as in Example 1, except that after introducing a hexane solution in which 1-octene was dissolved at a concentration of 0.8 M into the heated reactor and adding triisobutylaluminum (TiBAL) (2 ml of a 1 M solution) as a scavenger, hydrogen was additionally introduced at 1,000 ppm based on the total amount of feed materials introduced, and the transition metal compounds shown in Table 1 below were used.

The obtained ethylene-1-octene copolymer was then measured by the measurement methods described above, and the results are shown in Table 1 below.

**[Table 1]**

| | Catalyst Type | Amount of Hydrogen Introduced (ppm) | Viscosity (cP) | Weight-Average Molecular Weight (g/mol) | PDI | Density (g/cc) |
|---|---|---|---|---|---|---|
| Example 1 | Preparation Example 1 | 0 | 18,750 | 26,100 | 3.1 | 0.871 |
| Example 2 | Preparation Example 2 | 0 | 8,670 | 21,200 | 4.3 | 0.871 |
| Example 3 | Preparation Example 1 | 1,000 | 8,427 | 20,330 | 3.5 | 0.871 |
| Example 4 | Preparation Example 2 | 1,000 | 5,769 | 19,880 | 4.6 | 0.872 |
| Comparative Example 1 | Comparative Preparation Example 1 | 0 | 180,578 | 41,210 | 2.1 | 0.882 |
| Comparative Example 2 | Comparative Preparation Example 2 | 0 | 40,224 | 38,154 | 2.8 | 0.880 |
| Comparative Example 3 | Comparative Preparation Example 3 | 0 | 270,547 | 42,120 | 1.8 | 0.879 |
| Comparative Example 4 | Comparative Preparation Example 4 | 0 | 62,487 | 32,100 | 2.4 | 0.880 |
| Comparative Example 5 | Comparative Preparation Example 5 | 0 | 298,000 | 43,791 | 1.8 | 0.880 |
| Comparative Example 6 | Comparative Preparation Example 1 | 1,000 | 178,214 | 38,278 | 2.4 | 0.880 |
| Comparative Example 7 | Comparative Preparation Example 3 | 1,000 | 254,578 | 36,736 | 2.2 | 0.878 |
| Comparative Example 8 | Comparative Preparation Example 5 | 1,000 | 274,478 | 39,174 | 2.3 | 0.877 |

As shown in Table 1 above, Examples 1 and 2 were found to exhibit a very low viscosity of 20,000 cP or less. This suggests that the solution polymerization method for ethylene-1-octene copolymer using the transition metal compounds of Preparation Examples 1 and 2 can produce a low-viscosity ethylene-1-octene copolymer even without introducing hydrogen.

As shown in Table 1 above, Examples 1 and 2 exhibited a low weight-average molecular weight of 30,000 g/mol or less, and a broad molecular weight distribution, with a PDI of 3.0 or more. The ethylene-1-octene copolymers prepared in Examples 1 and 2 were also found to have a low density of 0.9 g/cc or less, or 0.880 g/cc or less in favorable cases.

In contrast, as shown in Table 1 above, Comparative Examples 1 to 5, as compared with Examples 1 and 2, were confirmed to have a viscosity exceeding 20,000 cP, a weight-average molecular weight exceeding 30,000 g/mol, and a PDI of less than 3.0, or 2.0 or less in unfavorable cases.

In Examples 3 and 4, ethylene-α-olefin copolymers were prepared by introducing hydrogen at 1,000 ppm based on the total amount of feed materials introduced into the reactor. As shown in Table 1 above, the viscosity of Examples 3 and 4 was further reduced.

In Comparative Examples 6 to 8, ethylene-α-olefin copolymers were prepared using the transition metal compounds of Comparative Preparation Examples 1, 3, and 5. Even when hydrogen was introduced at 1,000 ppm based on the total amount of feed materials, the viscosity was confirmed to remain very high.

Therefore, the solution polymerization method for ethylene-α-olefin copolymer using the transition metal compound according to the present disclosure can produce an ethylene-α-olefin copolymer having low viscosity, low molecular weight, and high polydispersity index by introducing a trace amount of hydrogen, or preferably, even without introducing hydrogen, and the prepared ethylene-α-olefin copolymer can satisfy a density of 0.9 g/cc or less.

As described above, the present disclosure has been described with reference to specific matters and limited examples. However, these are provided only to help a more general understanding of the present disclosure, and the present disclosure is not limited to the above examples. Various modifications and variations are possible from this description by those of ordinary skill in the art to which the present disclosure belongs.

Accordingly, the spirit of the present disclosure should not be limited to the embodiments described herein. All equivalents and equivalent modifications to the claims set forth below, as well as the claims themselves, fall within the scope of the present disclosure.

## Claims

1. A solution polymerization method for an ethylene-α-olefin copolymer using a catalyst composition comprising a transition metal compound of Formula 1 and a cocatalyst,
wherein the ethylene-α-olefin copolymer has a viscosity of 20,000 cP or less, wherein the viscosity is defined as a value measured using a Brookfield DV2TLV viscometer with an SC-31 spindle on a copolymer melted at 177 °C, at a torque value of 99 % or more: 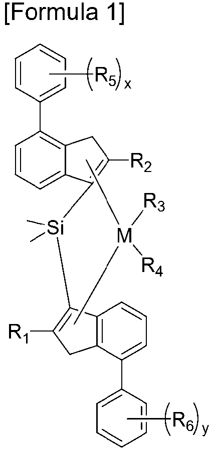
wherein, in Formula 1,
R₁ and R₂ are each independently a linear or branched C₁-C₇ alkyl,
R₃ and R₄ are each independently a linear or branched C₁-C₇ alkyl, a C₆-C₁₂ aryl, or a C₇-C₂₀ arylalkyl,
R₅ and R₆ are each independently hydrogen or a linear or branched C₁-C₄ alkyl,
x and y are each independently an integer of 1 to 5, and
M is Ti, Zr, or Hf.

2. The solution polymerization method for an ethylene-α-olefin copolymer according to claim 1,
wherein in Formula 1, R₁ and R₂ are the same and are methyl, ethyl, or n-butyl, R₃ and R₄ are the same and are methyl, ethyl, n-butyl, phenyl, or benzyl, R₅ and R₆ are each independently hydrogen or methyl, x and y are each independently an integer of 1 to 5, and M is Zr or Hf.

3. The solution polymerization method for an ethylene-α-olefin copolymer according to claim 1,
wherein the ethylene-α-olefin copolymer has a density of 0.9 g/cc or less as measured according to ASTM D1505.

4. The solution polymerization method for an ethylene-α-olefin copolymer according to claim 1,
wherein the ethylene-α-olefin copolymer has a weight average molecular weight of 30,000 g/mol or less.

5. The solution polymerization method for an ethylene-α-olefin copolymer according to claim 1,
wherein the ethylene-α-olefin copolymer has a polydispersity index of 3.0 or more.

6. The solution polymerization method for an ethylene-α-olefin copolymer according to claim 1,
wherein the ethylene-α-olefin copolymer has an ethylene repeating unit content of 50 to 99 mol%.

7. The solution polymerization method for an ethylene-α-olefin copolymer according to claim 1,
wherein the cocatalyst is at least one selected from the group consisting of N,N-diethylanilinium tetrakis(pentafluorophenyl)borate, N,N-2,4,6-pentamethylanilinium tetrakis(pentafluorophenyl)borate, and N,N-dimethylanilinium tetrakis(3,5-bistrifluoromethylphenyl)borate.

8. The solution polymerization method for an ethylene-α-olefin copolymer according to claim 1,
wherein the ethylene-α-olefin copolymer is a copolymer of ethylene and at least one α-olefin selected from the group consisting of 1-octene, 1-hexene, and 1-butene.

9. The solution polymerization method for an ethylene-α-olefin copolymer according to claim 8,
wherein the α-olefin is 1-octene, 1-hexene, or a mixed monomer thereof.

10. The solution polymerization method for an ethylene-α-olefin copolymer according to claim 1,
wherein the solution polymerization method uses at least one solvent selected from the group consisting of n-hexane, n-heptane, n-butane, n-pentane, n-octane, and cyclohexane.

11. The solution polymerization method for an ethylene-α-olefin copolymer according to claim 1,
wherein the solution polymerization method has a polymerization reaction temperature of 30 to 200 °C.

12. The solution polymerization method for an ethylene-α-olefin copolymer according to claim 1,
wherein the solution polymerization method comprises: a) preparing an α-olefin composition by mixing an α-olefin in a solvent; and
b) preparing the ethylene-α-olefin copolymer through copolymerization by introducing the catalyst composition into the α-olefin composition and introducing ethylene into a reactor.

13. The solution polymerization method for an ethylene-α-olefin copolymer according to claim 1,
wherein the solution polymerization method further comprises at least one aluminum scavenger selected from the group consisting of trimethylaluminum, triethylaluminum, tripropylaluminum, triisobutylaluminum, and trihexylaluminum.

14. The solution polymerization method for an ethylene-α-olefin copolymer according to claim 12,
wherein in b), hydrogen is further introduced, and an amount of the hydrogen introduced is 1,000 ppm or less based on a total amount of feed materials introduced.

15. An ethylene-α-olefin copolymer, wherein the copolymer has an ethylene repeating unit content of 50 to 99 mol%, a density of 0.85 to 0.90 g/cc as measured according to ASTM D1505, a weight-average molecular weight of 10,000 to 30,000 g/mol, and a polydispersity index of 3.0 to 6.0.
